# EUROPEAN PATENT APPLICATION

(11) **EP 2 741 501 A1**
(43) Date of publication of application: **11.06.2014**
(21) Application number: 13195663.3
(22) Date of filing: 04.12.2013
(51) Int. Cl.: H04N 9/31, G03B 21/14

(54) **Image display device comprising a molded one piece holder with an aperture**

(30) Priority: 10.12.2012 JP 2012269165
(71) Applicant: Funai Electric Co., Ltd., Daito-shi, Osaka 574-0013 (JP)
(72) Inventor: Kobayashi, Tomohiro, Daito-shi, Osaka 574-0013 (JP); Takahashi, Yutaka, Daito-shi, Osaka 574-0013 (JP); Shimizu, Daisuke, Daito-shi, Osaka 574-0013 (JP)
(74) Representative: Global IP Europe Patentanwaltskanzlei

(57) **Abstract**

An image display device includes a holder and an optical component. The holder has an optical path. The optical component is mounted to the holder such that the optical component is disposed in the optical path of the holder. The holder has a first portion with a first edge part and a second portion with a second edge part. The holder is integrally formed as a one-piece, unitary member. The first and second portions are axially and adjacently arranged relative to each other along an optical axis of the optical path of the holder. The first and second edge parts at least partially define a circumferential edge of an aperture that is arranged with respect to the optical component in the optical path of the holder.

## Description

### CROSS-REFERENCE TO RELATED APPLICATIONS

This application claims priority to Japanese Patent Application No. 2012-269165 filed on December 10, 2012. The entire disclosure of Japanese Patent Application No. 2012-269165 is hereby incorporated herein by reference.

### BACKGROUND

### Field of the Invention

The present invention generally relates to an image display device. More specifically, the present invention relates to an image display device in which an aperture is provided to a holder.

### Background Information

An image display device such as a laser projector displays a projected image with light rays by scanning the light rays vertically and horizontally with a scanning mirror or other such scanning device, for example.

A collimator that changes light rays into parallel light rays, an aperture that blocks out unnecessary light rays, and other such optical elements are used in image display devices such as this.

A conventional light source device of an image display device uses a collimator optical system to parallelize light emitted from a laser chip (a light source component). The device has an opening member that is provided along the optical path of light emitted from the light source component, transmits part of the light emitted from the light source component through an opening, and blocks light other than the light incident on the opening (see Japanese Laid-Open Patent Application Publication No. 2009-139908 (Patent Literature 1), for example).

### SUMMARY

It has been discovered that an optical device equipped with optical elements needs high positional accuracy with respect to the optical axis of light rays. Thus, there is a need to improve positional accuracy between optical elements.

Therefore, an aperture needs high positional accuracy of other optical elements along the optical path (such as lenses, mirrors, and prisms), and the designed optical axis and the opening center of the aperture must be positioned very accurately. For example, with an image display device that scans light rays with a scanning mirror, light that spreads out from the scanning mirror can become stray light and cause a decrease projected image quality, so although unnecessary light will be blocked by the aperture, if the positional accuracy of the opening center of the aperture is poor, there is the risk that a decrease in the amount of transmitted light will lower the image quality.

Meanwhile, it has also been discovered that the positional accuracy of an aperture opening center depends on the positional accuracy at which the aperture is provided to the housing of the optical device. With a method in which an aperture part is attached to the housing, a jig for positioning and fixing the aperture part very accurately is needed in the assembly of an optical device. However, the part tolerance of the aperture part and the tool tolerance of the jig result in the assembly tolerance of several tens of micrometers. Furthermore, if a positional adjustment mechanism for the aperture part is installed in the optical device, the optical device requires more parts, which results in entailing more work for the assembly of the optical device.

One object of the present disclosure is to provide an image display device that is easy to produce and offers accurate positioning of an aperture.

In view of the state of the know technology, an image display device includes a holder and an optical component. The holder has an optical path. The optical component is mounted to the holder such that the optical component is disposed in the optical path of the holder. The holder has a first portion with a first edge part and a second portion with a second edge part. The holder is integrally formed as a one-piece, unitary member. The first and second portions are axially and adjacently arranged relative to each other along an optical axis of the optical path of the holder. The first and second edge parts at least partially define a circumferential edge of an aperture that is arranged with respect to the optical component in the optical path of the holder.

Other objects, features, aspects and advantages of the present disclosure will become apparent to those skilled in the art from the following detailed description, which, taken in conjunction with the annexed drawings, discloses a preferred embodiment of an image display device.

### BRIEF DESCRIPTION OF THE DRAWINGS

Referring now to the attached drawings which form a part of this original disclosure:
FIG. 1 is a perspective view of an optical device in accordance with one embodiment;
FIG. 2 is an enlarged, perspective view of a portion II in FIG. 1;
FIG. 3 is an enlarged, perspective view of an aperture of the optical device;
FIG. 4 is a cross sectional view of the optical device taken along IV-IV line in FIG. 3; and
FIG. 5 is a schematic diagram illustrating an internal configuration of the optical device.

### DETAILED DESCRIPTION OF EMBODIMENTS

A preferred embodiment will now be explained with reference to the drawings. It will be apparent to those skilled in the art from this disclosure that the following descriptions of the embodiment are provided for illustration only and not for the purpose of limiting the invention as defined by the appended claims and their equivalents.

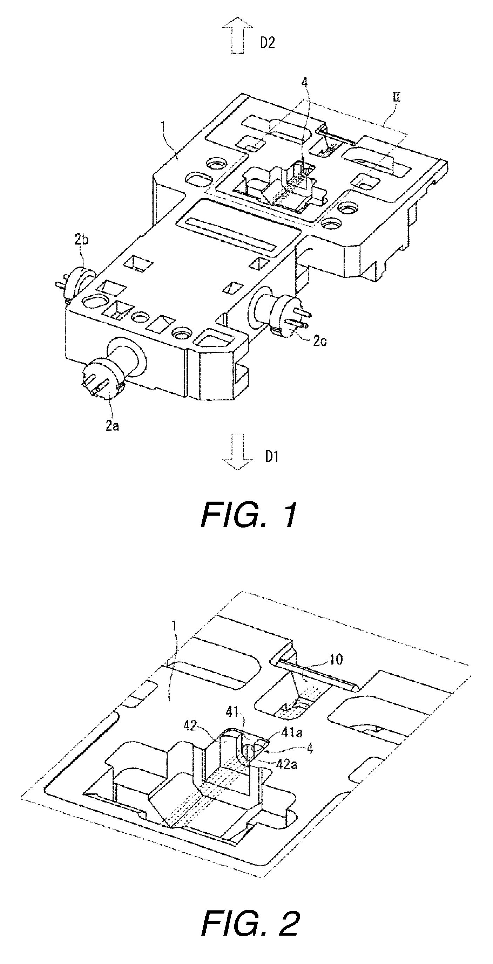

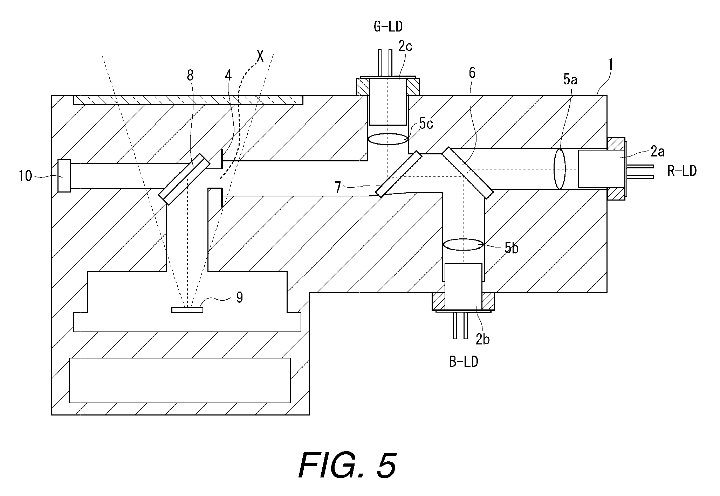

Referring initially to FIG. 1, an optical device (e.g., image display device) is illustrated in accordance with one embodiment. Specifically, FIG. 1 shows the overall configuration of the optical device. FIGS. 2 to 4 show the configurations of main parts, thereof, and FIG. 5 shows the simplified internal configuration thereof.

The optical device in the illustrated embodiment is one that is used in a laser projector, in which three laser light source elements 2a to 2c, an aperture 4, and various other kinds of optical elements are assembled in a housing 1 (e.g., a holder).

The housing 1 in the illustrated embodiment is molded from a synthetic material in a set of metal molds. These molds are split into two parts above (D1) and below (D2) in FIG. 1. In the illustrated embodiment, the material of the housing 1 may be a metal or the like, and the type of metal mold should be selected as dictated by its relation to the aperture (discussed below).

First, the internal configuration of the housing 1 will be described through reference to FIG. 5.

Various kinds of optical elements (e.g., optical components) are provided inside the housing 1, such as collimator lenses 5a to 5c, dichroic mirrors 6 and 7, a half mirror 8, a MEMS scanning mirror 9 and a photodiode (PD) 10. The laser light emitted from the laser light source elements 2a to 2c attached to the housing 1 moves along an optical path made up of these optical elements.

The laser light source elements 2a to 2c are laser diodes (LD). The laser light source element 2a outputs laser light with a red component (R), the laser light source element 2b outputs laser light with a blue component (B), and the laser light source element 2c outputs laser light with a green component (G).

The collimator lenses 5a to 5c parallelize the laser light emitted from the laser light source elements 2a to 2c, respectively, and guide this light to the dichroic mirrors 6 and 7.

The dichroic mirrors 6 and 7 reflect only laser light of a particular wavelength, and transmit all others. The red laser light emitted from the laser light source element 2a is combined with the blue laser light emitted from the laser light source element 2b by the dichroic mirror 6, and this combined laser light is combined with the green laser light emitted from the laser light source element 2c by the dichroic mirror 7.

This combined laser light is narrowed by the aperture 4, incident on the MEMS scanning mirror 9 via the half mirror 8, reflected by the scanning mirror 9 that is scanned horizontally and vertically, so that an image is scan projected onto a projection surface.

The half mirror 8 transmits part of the incident laser light and directs it to the PD 10. The quantity of light detected by the PD 10 is inputted to a laser controller of the laser projector, and the laser controller controls the laser light source elements 2a to 2c so as to obtain the targeted laser output.

FIG. 5 is a simplified diagram illustrating the internal configuration. For the sake of convenience the light beam going, through the half mirror 8, to the scanning mirror 9 or the PD 10 is shown as if it intersected the light beam going from the scanning mirror 9 to the projection surface, but these light beams are offset in a direction perpendicular to the viewing plane in the drawing so as not to cross.

The aperture 4 in the illustrated embodiment is located along the optical path from the laser light source elements 2a to 2c to the scanning mirror 9 as mentioned above, and is molded integrally with the housing 1 by the metal mold molding of the housing 1, as shown in detail in FIGS. 2 to 4. In other words, the optical device further includes the plurality of laser light source elements 2a to 2c (e.g., laser light sources), and the MEMS scanning mirror 9 (e.g., the scanning mirror). The laser light source elements 2a to 2c and the scanning mirror 9 are mounted to the housing 1 such that the optical path of the housing 1 is defined between the laser light source elements 2a to 2c and the scanning mirror 9.

The aperture 4 is formed by molding two U-shaped portions 41 and 42 that are adjacent and superposed, integrally with the housing 1. The U-shaped curved parts 41a and 42a of these U-shaped portions 41 and 42 are inverted with respect to each other. Therefore, the two superposed U-shaped portions 41 and 42 form a circular opening in the light beam axial direction when the semi-cylindrical bottom parts of the curved parts 41a and 42a are superposed. This round hole functions as the aperture 4.

The opening directions of these curved parts 41a and 42a are mutually opposite, with the curved part 41a opening in a split direction D1 above the housing metal mold, and the curved part 42a opening in a split direction D2 below the housing metal mold. Therefore, since the U-shaped portions 41 and 42 open in the split direction of the metal mold of the housing 1, the U-shaped portions 41 and 42 can be integrally molded in the metal mold simultaneously with the housing 1, using the same synthetic resin as that used for the housing 1.

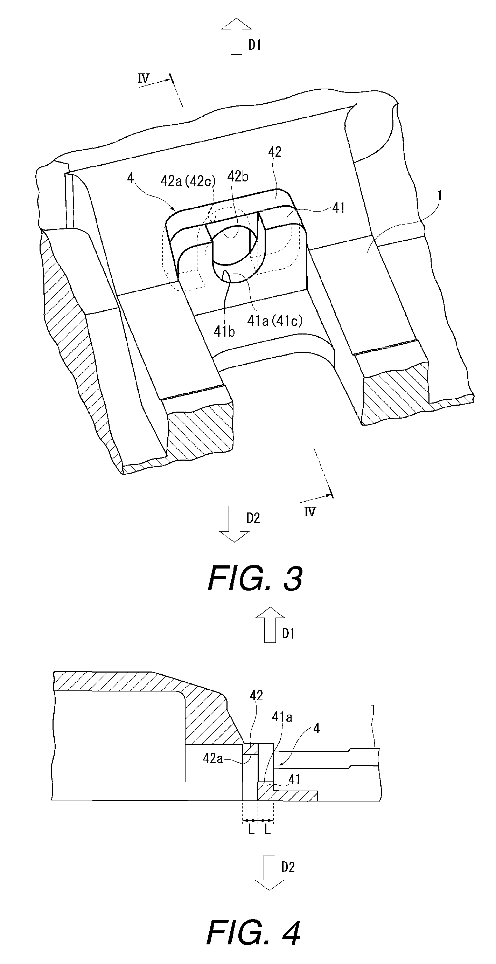

In other words, in the illustrated embodiment, the optical device (e.g., the image display device) includes the housing 1 with the optical path, and the optical elements (e.g., the optical components) mounted to the housing 1 such that the optical elements are disposed in the optical path of the housing 1. As shown in FIG. 3, the housing 1 has the U-shaped portion 41 (e.g., a first portion) with an edge part 41b (e.g., a first edge part) and a U-shaped portion 42 (e.g., a second portion) with an edge part 42b (e.g., a second edge part). The housing 1 is integrally formed as a one-piece, unitary member. The U-shaped portions 41 and 42 are axially and adjacently arranged relative to each other along an optical axis X of the optical path of the housing 1. The edge parts 41b and 42b at least partially define a circular opening (e.g., a circumferential edge) of the aperture 4 that is arranged with respect to the optical elements in the optical path of the housing 1.

In the illustrated embodiment, with the optical device, the edge part 41b of the U-shaped portion 41 defines a part of the circumferential edge of the aperture 4, and the edge part 42b of the U-shaped portion 42 defines a remainder of the part of the circumferential edge of the aperture 4. Specifically, with the optical device, the edge parts 41b and 42b define first and second halves of the circumferential edge of the aperture 4, respectively. In particular, as shown in FIG. 3, with the optical device, the edge parts 41b and 42b define lower and upper halves of the circumferential edge of the aperture 4, respectively.

As shown in FIG. 3, with the optical device, the U-shaped portion 41 further has the curved part 41a (e.g., the first surface) extending from the edge part 41b in a first axial direction of the optical axis X, and the U-shaped portion 42 further has the curved part 42a (e.g., the second surface) extending from the edge part 42a in a second axial direction of the optical axis X. The second axial direction is opposite the first axial direction. With the optical device, the curved part 41a of the U-shaped portion 41 and the curved part 42a of the U-shaped portion 42 axially extend in parallel with the optical axis X, respectively. Furthermore, with the optical device, the curved part 41a of the U-shaped portion 41 includes a semi-cylindrical surface 41c (e.g., a first semi-cylindrical surface) with a center axis that is coincide with the optical axis X, and the curved part 42a of the U-shaped portion 42 includes a semi-cylindrical surface 42c (e.g., a second semi-cylindrical surface) with a center axis that is coincide with the optical axis X. The semi-cylindrical surfaces 41c and 42c are disposed on opposite sides of an imaginary center plane that includes the optical axis X, respectively.

As mentioned above, with the optical device, the housing 1 is formed by molding using a set of metal molds. The U-shaped portions 41 and 42 including U-shaped portions, respectively. The U-shaped portions 41 and 42 are open in split directions D1 and D2 (e.g., removal directions) of the metal molds, respectively. The circumferential edge of the aperture 4 has a circular shape that is defined by arranging the U-shaped portions 41 and 42 relative to each other.

The wall thickness L of the aperture will sometimes need to be small, but when the aperture is produced as a separate part and an attempt made to attach it to the housing with good positional accuracy, the work can demand considerable skill.

In contrast, with a method in which the aperture 4 is molded integrally with the housing 1, the precision of the metal mold allows an aperture 4 with quite a thin wall to be provided with good positional accuracy to the housing. As shown in FIG. 4, in the illustrated embodiment the wall thickness of the aperture 4 is set at 0.8 mm.

Also, an optical device used in a laser projector needs to be compact.

An important function of the aperture 4 is to block unnecessary laser light that spreads out from the scanning mirror 9, since this spreading light becomes stray light and can contribute to a decrease in the quality of the projected image, so the opening diameter of the aperture 4 needs to be made small according to the scanning mirror.

In contrast, with a method in which the aperture 4 is molded integrally with the housing 1, the precision of the metal mold allows an aperture 4 with quite a narrow opening to be provided with good positional accuracy to the housing. In the illustrated embodiment the opening diameter of the aperture 4 is set to approximately 0.8 mm, using a scanning mirror 9 with a diameter of approximately 0.9 mm.

In the illustrated embodiment, the round hole of the aperture 4 is formed by superposing two U-shaped portions 41 and 42. However, the round hole of the aperture 4 can be formed by superposing three or more U-shaped portions.

Also, the opening of the aperture 4 is not limited to being a true circle, and can have any of various shapes as needed, such as being elliptical. This shape can be formed by the shape of the curved parts of the U-shaped portions.

With an optical device using the laser light as in the illustrated embodiment, because the beam precision of the laser light is high, among other reasons, the optical elements, such as the aperture 4 and the like, need to be small in size and have high positional accuracy. The present application can be favorably applied in such cases.

However, the present application can also be applied to an optical device using a light beam other than laser light, and this will afford the same action and effect as described above.

In the illustrated embodiment, the aperture 4 is molded integrally with the housing 1 by superposing the plurality of U-shaped portions 41 and 42 that open in the removal directions of the metal molds. However, the present application also encompasses a mode in which the aperture 4 is molded integrally with the housing 1 by a method that does not entail the removal of the metal molds with these U-shaped portions 41 and 42.

For instance, with a mode in which the opening of the aperture is formed by a core, even though this will lack the advantage of being able to form the aperture by removing the metal molds as above, it will have the advantage of providing the aperture integrally with the housing in the following manner.

The lenses, mirrors, light sources, and other such optical elements that form the optical path of the optical device are produced and attached to the housing 1 as separate parts from the housing 1, due to their materials, processing methods, and so forth. In contrast, the aperture 4 that can be formed by nothing more than an opening does not have to be produced as a separate part from the housing 1 because of the material, processing method, and so forth, and can instead be molding integrally with the housing 1.

Meanwhile, in regard to the assembly of a conventional optical device, when all optical elements including an aperture are attached to a housing, this entails the work of attaching all the optical elements after aligning them very precisely with each other. However, when the position of the aperture 4 is determined as in the illustrated embodiment, the aperture 4 can be used as a reference to attach the other optical elements, affording a clear reference and allows other optical elements to be attached easily to the housing 1 with better positional accuracy.

Therefore, an advantage is that providing the aperture 4 integrally with the housing 1 simplifies assembly work of high positional accuracy.

In the illustrated embodiment, with the optical device, the curved part 41a of the U-shaped portion 41 and the curved part 42a of the U-shaped portion 42 axially extend from the edge part 41b and the edge part 42b in parallel with the optical axis X, respectively. However, the curved part 41a can axially extend from the edge part 41b in a direction non-parallel to the optical axis X, and the curved part 42a can axially extend from the edge part 42b in a direction non-parallel to the optical axis X. In particular, in this case, the curved part 41a can include a curved surface that forms a part of cone, while the curved part 42a can include a curved surface that forms a part of cone.

In the illustrated embodiment, the optical device has a housing that provides an optical path, and an aperture formed integrally with the housing and located in the optical path.

Consequently, there is no need for an aperture part to be separately attached to the housing, and the positional accuracy of the aperture can be improved. This allows other optical elements to be attached to the housing by using the aperture as a reference, and affords an optical path with the high accuracy it was designed to have.

With this optical device, it is preferable if the housing is formed in a metal mold, and the aperture is a circular hole that overlaps a plurality of U-shaped portions that open in the removal direction of the metal mold.

This allows the housing to be easily produced from a synthetic resin or other such material, and allows a highly accurate aperture to be molded with no problem in a metal mold.

Depending on the housing molding requirements, the metal mold may be a type that is split into two or more parts, so long as the U-shaped portions forming the aperture will come out of the mold. The number of U-shaped portions forming the aperture may be set as desired to two or more, based on the number of metal molds, the removal direction, and other such considerations.

With this optical device, it is preferable if a laser light source and a scanning mirror are attached to the housing, and the aperture is located along the optical path from the laser light source to the scanning mirror.

The optical device can be an optical device forming an optical path other than a laser beam, but can be used to advantage in a laser optical device such as a laser projector that needs to be small in size and have high optical axis accuracy. With this laser optical device, it is preferable to use a MEMS (Micro Electro Mechanical System) type of scanning mirror, which is advantageous in terms of compact size, lower power consumption, faster processing, and so on.

With this optical device, an optical device can be obtained that is easy to produce and offers accurate positioning of an aperture.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts.

While only a preferred embodiment has been chosen to illustrate the present invention, it will be apparent to those skilled in the art from this disclosure that various changes and modifications can be made herein without departing from the scope of the invention as defined in the appended claims. Furthermore, the foregoing descriptions of the embodiment according to the present invention are provided for illustration only, and not for the purpose of limiting the invention as defined by the appended claims and their equivalents.

## Claims

1. An image display device comprising:
a holder with an optical path; and
an optical component mounted to the holder such that the optical component is disposed in the optical path of the holder;
the holder having a first portion with a first edge part and a second portion with a second edge part, the holder being integrally formed as a one-piece, unitary member, the first and second portions being axially and adjacently arranged relative to each other along an optical axis of the optical path of the holder, the first and second edge parts at least partially defining a circumferential edge of an aperture that is arranged with respect to the optical component in the optical path of the holder.

2. The image display device according to claim 1, wherein
the first edge part of the first portion defines a part of the circumferential edge of the aperture, and
the second edge part of the second portion defines a remainder of the part of the circumferential edge of the aperture.

3. The image display device according to claim 1 or 2, wherein
the first and second edge parts define first and second halves of the circumferential edge of the aperture, respectively.

4. The image display device according to any of claims 1 to 3, wherein
the first and second edge parts define lower and upper halves of the circumferential edge of the aperture, respectively.

5. The image display device according to any of claims 1 to 4, wherein
the first portion further has a first surface extending from the first edge part in a first axial direction of the optical axis, and
the second portion further has a second surface extending from the second edge part in a second axial direction of the optical axis, with the second axial direction being opposite the first axial direction.

6. The image display device according to claim 5, wherein
the first surface of the first portion and the second surface of the second portion axially extend in parallel with the optical axis, respectively.

7. The image display device according to claim 6, wherein
the first surface of the first portion includes a first semi-cylindrical surface with a center axis that is coincide with the optical axis, and
the second surface of the second portion includes a second semi-cylindrical surface with a center axis that is coincide with the optical axis,
the first and second semi-cylindrical surfaces being disposed on opposite sides of an imaginary center plane that includes the optical axis, respectively.

8. The image display device according to any of claims 1 to 7, wherein
the holder is formed by molding using a set of metal molds, the first and second portions including U-shaped portions, respectively, the U-shaped portions being open in removal directions of the metal molds, respectively, and
the circumferential edge of the aperture has a circular shape that is defined by arranging the U-shaped portions relative to each other.

9. The image display device according to any of claims 1 to 8, further comprising
a laser light source, and
a scanning mirror,
the laser light source and the scanning mirror being mounted to the holder such that the optical path of the holder is defined between the laser light source and the scanning mirror.
